# DEMANDE DE BREVET EUROPEEN

(11) **EP 0 713 809 A1**
(43) Date de publication de la demande: **29.05.1996**
(21) Numéro de dépôt: 95402629.0
(22) Date de dépôt: 22.11.1995
(51) Int. Cl.: B60S 1/34

(54) **Essuie-glace de véhicule automobile**

(30) Priorité: 25.11.1994 FR 9414256
(71) Demandeur: PAUL JOURNEE S.A., F-60240 Reilly (FR)
(72) Inventeur: Journee, Maurice, F-60240 Reilly (FR)
(74) Mandataire: Lemaire, Marc

(57) **Abrégé**

L'invention propose un essuie-glace de véhicule automobile du type comportant un bras d'essuie-glace (10) articulé sur une tête d'entraînement (16) autour d'un axe d'articulation (X-X) et comportant un ressort à boudin (28) agencé dans un logement longitudinal (22) de la tête d'entraînement (16) et qui agit sur le bras d'essuie-glace (10) en exerçant une force d'essuyage dont la droite support (Y-Y) est décalée par rapport à l'axe d'articulation (X-X), l'une des extrémités du ressort (28) étant reliée au bras d'essuie-glace (10) en un point (46) décalé par rapport à l'axe général (Y-Y) du ressort, par l'intermédiaire d'une tige de liaison (34) qui s'étend dans le prolongement de l'axe (Y-Y) du ressort (28) et qui est guidée en coulissement selon cet axe.

## Description

La présente invention concerne un essuie-glace de véhicule automobile.

L'invention concerne plus particulièrement un essuie-glace du type comportant un bras d'essuie-glace articulé sur une tête d'entraînement autour d'un axe d'articulation qui s'étend transversalement par rapport à la direction longitudinale générale de l'essuie-glace et du type comportant un ressort d'essuyage à boudin agencé dans un logement longitudinal de la tête d'entraînement et qui agit sur le bras d'essuie-glace en exerçant une force d'essuyage dont la droite support est décalée par rapport à l'axe d'articulation.

La tête d'entraînement est entraînée dans un mouvement alterné de rotation par un arbre d'essuyage, également appelé arbre moteur, afin d'obtenir un balayage de la vitre à essuyer.

Le bras d'essuie-glace porte un balai d'essuie-glace qui est articulé et qui est apte à essuyer la surface vitrée, telle que par exemple un pare-brise de véhicule.

Afin d'obtenir un essuyage efficace de la surface vitrée, il est nécessaire que la lame d'essuyage du balai d'essuie-glace soit appliquée sur la surface vitrée à essuyer avec une force de pression, ou force d'essuyage, suffisamment importante qui résulte de l'action du ressort d'essuyage qui applique au bras d'essuie-glace un couple d'essuyage, également appelé couple nominal d'essuyage.

Selon les différentes conceptions connues pour l'agencement du ressort d'essuyage dans la tête d'entraînement, et afin d'obtenir le décalage de la droite support de la force d'essuyage par rapport à l'axe d'articulation, il est généralement proposé de décaler l'ensemble du ressort d'essuyage par rapport à l'axe d'articulation en agençant le ressort selon une direction sensiblement parallèle à l'orientation générale de la tête d'entraînement ou d'incliner l'ensemble du ressort d'essuyage à l'intérieur du corps de la tête d'entraînement.

Ces deux conceptions générales ont pour inconvénient d'augmenter l'encombrement global de la tête d'entraînement et notamment l'épaisseur de cette dernière.

La présente invention a pour but de proposer une nouvelle conception d'un essuie-glace qui permet de remédier aux inconvénients qui viennent d'être mentionnés.

Dans ce but, l'invention propose un essuie-glace caractérisé en ce que l'une des extrémités du ressort est reliée au bras d'essuie-glace en un point décalé par rapport à l'axe général du ressort par l'intermédiaire d'une tige de liaison qui s'étend dans le prolongement de l'axe du ressort et qui est guidée en coulissement selon cet axe.

Selon d'autres caractéristiques de l'invention :
- la tige de liaison prend appui sur un coussinet de guidage en coulissement ;
- le coussinet de guidage est une patte transversale de guidage qui s'étend dans le logement ;
- la tige de liaison est reliée à une tige transversale d'accrochage portée par le bras d'essuie-glace par l'intermédiaire d'un crochet à deux branches formant entre elles un angle dans lequel est reçu l'axe d'articulation lorsque le bras d'essuie-glace pivote par rapport à la tête d'entraînement depuis sa position normale d'essuyage vers une position soulevée par rapport à la vitre à essuyer ;
- le ressort d'essuyage est un ressort de traction dont une extrémité constitue la tige de liaison ;
- le ressort d'essuyage est un ressort de compression dont une extrémité agit sur une tige coaxiale au corps du ressort et qui constitue la tige de liaison ;
- le corps de la tête d'entraînement est réalisé par moulage et comporte un logement pour le ressort qui débouche dans une face inférieure du corps tournée vers la vitre à essuyer.

D'autres caractéristiques et avantages de l'invention apparaîtront à la lecture de la description détaillée qui va suivre pour la compréhension de laquelle on se reportera aux dessins annexés dans lesquels :
- La figure 1 est une vue schématique en section longitudinale partielle d'un premier exemple de réalisation d'une tête d'entraînement et d'un bras d'essuie-glace conforme aux enseignements de l'invention dans lequel la tête d'entraînement est une pièce en tôle et dans lequel le ressort d'essuyage est un ressort de traction ;
- la figure 2 est une vue en perspective, avec arrachement partiel, de l'ensemble illustré sur la figure 1 ;
- les figures 3 et 4 sont des vues similaires à celles des figures 1 et 2 qui illustrent un second mode de réalisation dans lequel le ressort d'essuyage est un ressort de compression ;
- la figure 5 est une vue schématique en perspective éclatée d'un mode de réalisation par moulage d'une tête d'entraînement réalisée conformément aux enseignements de l'invention en association avec un ressort de traction ; et
- la figure 6 est une vue de dessus, avec arrachement partiel, de la tête d'entraînement de la figure 5 avec son ressort d'essuyage.

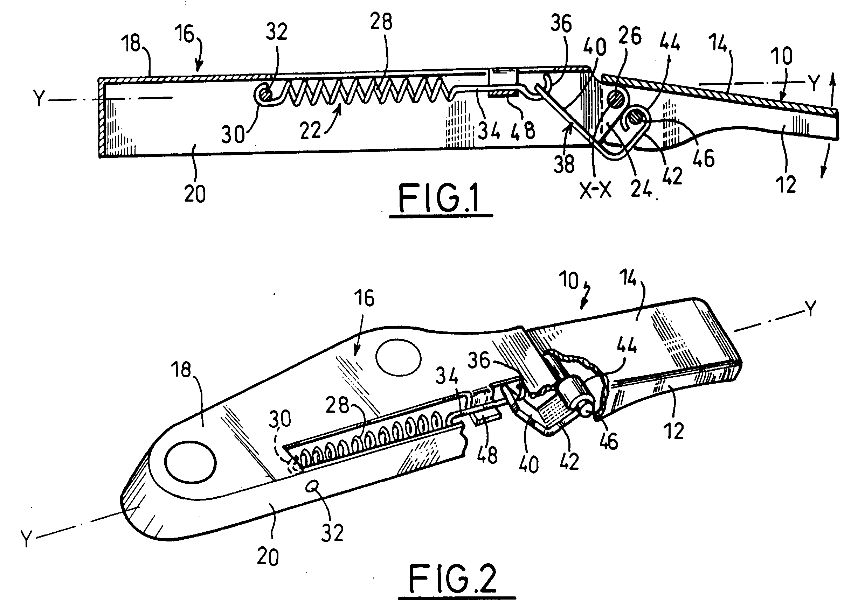

On a représenté aux figures 1 et 2 une partie d'un bras d'essuie-glace 10 qui, selon une conception connue, est une pièce allongée qui présente en section transversale une forme de U renversé et qui comporte deux joues latérales parallèles 12 reliées entre elles par un dos supérieur 14.

Le bras d'essuie-glace 10 est monté articulé autour d'un axe géométrique d'articulation X-X sur une tête d'entraînement 16.

Dans le mode de réalisation illustré aux figures 1 et 2, la tête d'entraînement 16 est réalisée de manière schématique sous la forme d'une pièce en tôle découpée et pliée qui comporte un dos supérieur 18 et deux joues latérales 20 qui délimitent un logement interne 22.

Les portions d'extrémité 24 des joues latérales 20 reçoivent une tige ou pivot d'articulation 26 dont les extrémités libres sont reçues dans les trous correspondants formés dans les joues latérales 12 du bras d'essuie-glace 10 pour assurer l'articulation de ce dernier sur la tête d'entraînement 16 autour de l'axe X-X.

L'ensemble illustré sur la figure 1 comporte également un ressort d'essuyage 28 qui est un ressort à boudin, également appelé ressort hélicoïdal, de traction dont une première extrémité en forme de crochet 30 est accrochée sur une tige transversale 32 qui s'étend entre les joues 20 du corps de la tête d'entraînement 16.

La seconde extrémité 34 du ressort de traction 28 constitue, au sens de l'invention, une tige de liaison qui s'étend selon l'axe général Y-Y du ressort qui est également la droite support de la force de traction que le ressort 28 est susceptible d'exercer.

L'extrémité en forme de tige de liaison 34 se termine par une boucle ouverte 36 pour son accrochage sur un crochet de liaison 38.

Le crochet 38 comporte une première branche 40 sur laquelle est accrochée la boucle 36 de la tige de liaison 34 et une seconde branche 42 dont l'extrémité recourbée 44 est accrochée sur une tige transversale d'accrochage 46 qui s'étend transversalement entre les joues 12 du bras d'essuie-glace.

La tige de liaison 34 assure donc l'accrochage indirect du ressort d'essuyage, de traction, 28 sur le bras d'essuie-glace 10 en un point 46 qui est décalé verticalement par rapport à l'axe général Y-Y du ressort comme on peut le voir sur la figure 1.

Afin de pouvoir appliquer au bras d'essuie-glace 10, par l'intermédiaire du crochet 38, une force d'essuyage, la tige de liaison 34 est guidée en coulissement, conformément aux enseignements de l'invention, sur une patte 48 du corps de la tête d'entraînement 16 qui s'étend transversalement.

Comme on peut le voir sur les figures 1 et 2, les branches 40 et 42 du crochet 38 forment entre elles un angle, sensiblement égal à 90° qui est tourné vers l'axe d'articulation 26 et qui permet un débrayage de l'essuie-glace, c'est-à-dire qui permet de soulever ce dernier de la vitre à essuyer en le faisant pivoter autour de l'axe X-X dans le sens anti-horaire en considérant la figure 1.

Comme on peut le voir sur les figures 1 et 2, et grâce à l'agencement géométrique du ressort selon l'invention, il est possible de disposer celui-ci à la partie supérieure du corps de la tête d'entraînement 16 pratiquement dans l'alignement avec l'axe d'articulation X-X et de réduire l'épaisseur verticale de la tête d'entraînement 16 ou de disposer de place à la partie inférieure de cette dernière pour les moyens de fixation de la tête d'entraînement sur un ou plusieurs arbres d'entraînement.

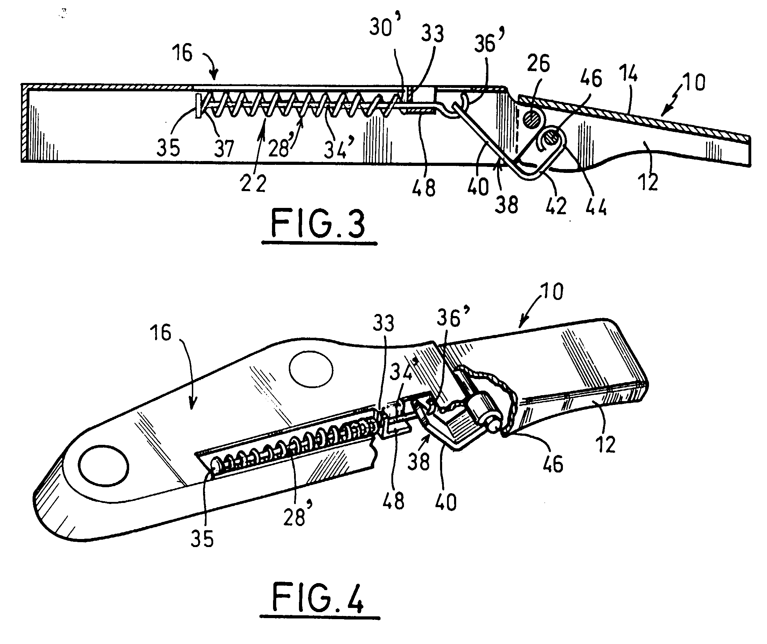

Dans le mode de réalisation illustré sur les figures 3 et 4, le ressort d'essuyage est un ressort de compression 28' dont une première extrémité 30' prend appui sur une patte transversale fixe 33 du corps de la tête d'entraînement 16 et dont l'autre extrémité 37 prend appui contre une tête d'appui 35 formée à l'extrémité libre d'une tige 34' coaxiale du corps hélicoïdal du ressort 28' qui constitue la tige de liaison au sens de l'invention dont l'extrémité 36' est guidée par le coussinet 48 et est accrochée sur la branche 40 du crochet 38.

Le mode d'action du ressort 28' est ainsi identique à celui du ressort de traction 28 illustré aux figures 1 et 2.

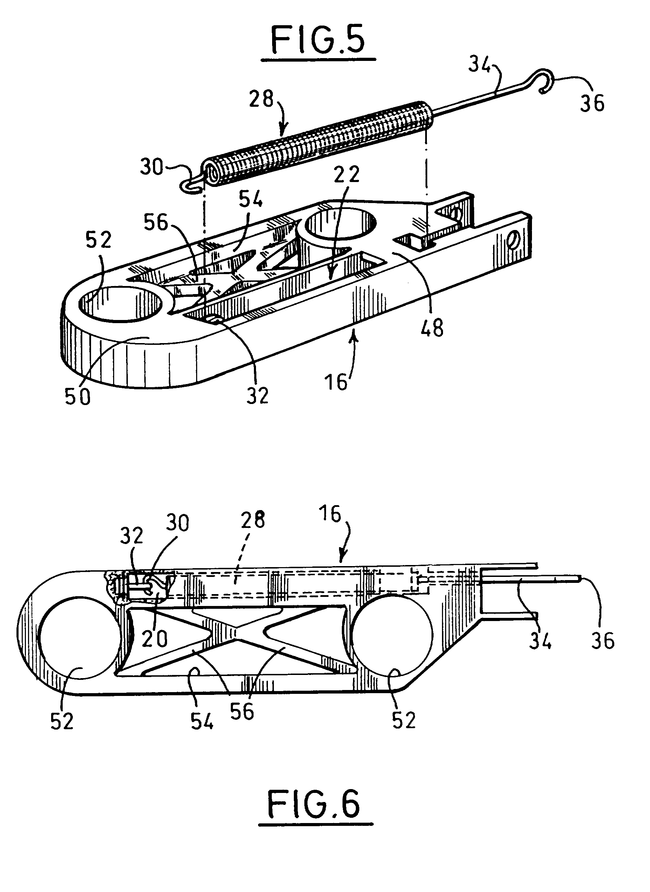

Dans le mode de réalisation illustré aux figures 5 et 6, la tête d'entraînement 16 est une pièce moulée en alliage léger ou en matière plastique dont la face inférieure 50 comporte un logement ouvert 22 réalisé venu de matière par moulage dans lequel peut être agencé par exemple un ressort de traction 28 dont l'extrémité 30 est accrochée sur un crochet 32 qui est par exemple réalisé sous la forme d'un insert surmoulé dans le matériau constitutif du corps de la tête d'entraînement 16.

La patte transversale constituant le coussinet de guidage en coulissement 48 de la tige de liaison 34 du ressort 28 peut par exemple être également réalisée venue de matière par moulage avec le corps de la tête d'entraînement.

Dans le mode de réalisation illustré aux figures 5 et 6, comme dans le cas de ceux illustrés aux figures 1 et 2, la tête d'entraînement est destiné à être associée à deux bielles d'un système du type pantographe dont les extrémités sont articulées dans des trous 52 formés venus de matière dans le corps de la tête 16, la partie centrale de cette dernière étant allégée par un évidement partiel 54 renforcé par des nervures de moulage 56.

## Revendications

1. Essuie-glace de véhicule automobile du type comportant un bras d'essuie-glace (10) articulé sur une tête d'entraînement (16) autour d'un axe d'articulation (X-X) qui s'étend transversalement par rapport à la direction longitudinale générale de l'essuie-glace et du type comportant un ressort à boudin (28) agencé dans un logement longitudinal (22) de la tête d'entraînement (16) et qui agit sur le bras d'essuie-glace (10) en exerçant une force d'essuyage dont la droite support (Y-Y) est décalée par rapport à l'axe d'articulation (X-X), caractérisé en ce que l'une des extrémités du ressort (28) est reliée au bras d'essuie-glace (10) en un point (46) décalé par rapport à l'axe général (Y-Y) du ressort, par l'intermédiaire d'une tige de liaison (34) qui s'étend dans le prolongement de l'axe (Y-Y) du ressort (28) et qui est guidée en coulissement selon cet axe.

2. Essuie-glace selon la revendication 1, caractérisé en ce que la tige de liaison (34) prend appui sur un coussinet de guidage en coulissement (48).

3. Essuie-glace selon la revendication 2, caractérisé en ce que le coussinet de guidage (48) est une patte transversale de guidage qui s'étend dans ledit logement (22).

4. Essuie-glace selon l'une quelconque des revendications précédentes, caractérisé en ce que la tige de liaison (34) est reliée à une tige transversale d'accrochage (46) portée par le bras d'essuie-glace (10) par l'intermédiaire d'un crochet (38) à deux branches (40, 42) formant entre elles un angle dans lequel est reçu l'axe d'articulation (X-X, 26) lorsque le bras d'essuie-glace (10) pivote par rapport à la tête d'entraînement (16) depuis sa position normale d'essuyage vers une position soulevée par rapport à la vitre à essuyer.

5. Essuie-glace selon l'une quelconque des revendications précédentes, caractérisé en ce que le ressort d'essuyage (28) est un ressort de traction dont une extrémité (34) constitue la tige de liaison.

6. Essuie-glace selon l'une quelconque des revendications 1 à 4, caractérisé en ce que le ressort d'essuyage (28') est un ressort de compression dont une extrémité (37) agit sur une tige (34') coaxiale au corps du ressort et qui constitue la tige de liaison.

7. Essuie-glace selon l'une quelconque des revendications précédentes, caractérisé en ce que le corps de la tête d'entraînement est réalisé par moulage et comporte un logement (22) pour le ressort (28) qui débouche dans une face inférieure (50) du corps tournée vers la vitre à essuyer.
